# EUROPEAN PATENT SPECIFICATION

(11) **EP 2 176 116 B1**
(45) Date of publication and mention of the grant of the patent: **20.11.2013**
(21) Application number: 09787909.2
(22) Date of filing: 30.07.2009
(51) Int. Cl.: B62K 11/10, B62K 19/06

(54) **SCOOTER TYPE VEHICLE**
ROLLERARTIGES FAHRZEUG
VÉHICULE DE TYPE SCOOTER

(30) Priority: 01.08.2008 JP 2008200112; 19.02.2009 JP 2009036379
(43) Date of publication of application: 21.04.2010
(73) Proprietor: Yamaha Hatsudoki Kabushiki Kaisha, Iwata-shi, Shizuoka 438-8501 (JP)
(72) Inventor: WANG, Hsing-yang, Shizuoka, 4388501 (JP); OOHIRA, Masaru, Shizuoka, 4388501 (JP); MOCHIZUKI, Kan, Shizuoka, 4388501 (JP)
(74) Representative: Schoppe, Fritz
(86) International application number: PCT/JP2009/003626
(87) International publication number: WO 2010/013482

(56) References cited:
- EP-A2- 1 914 158
- FR-A1- 2 855 462
- JP-A- 3 109 130
- JP-A- 10 007 062
- US-A- 5 433 286

## Description

### [Technical Field]

The present invention relates to a scooter type vehicle.

WO 2004/071858 discloses an example of a conventional scooter type vehicle wherein a low-floor footboard is provided between a steering bar for steering the front wheel and a seat where the rider sits.

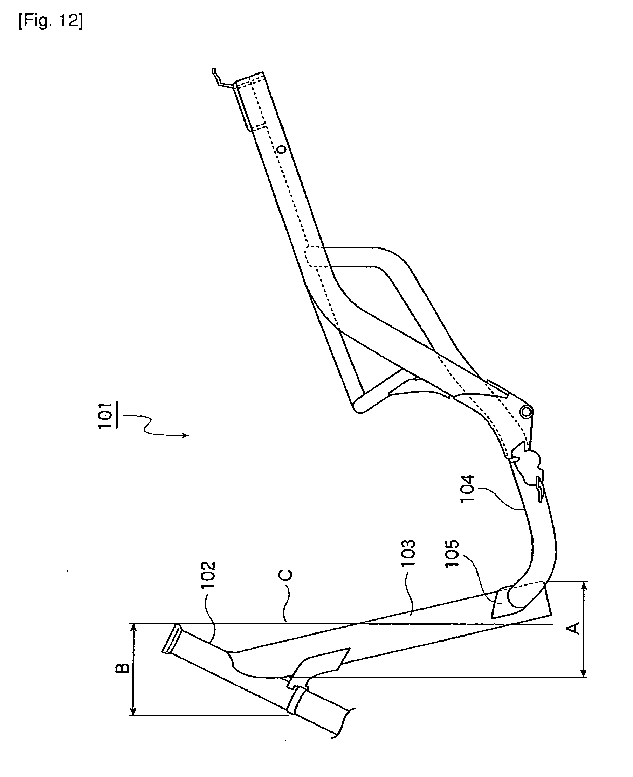

A vehicle frame 101 of this scooter type vehicle includes a head pipe 102, a downtube 103, and a pair of left and right side tubes 104, as illustrated in FIG. 12. The head pipe 102 is positioned at the top on the front side of the vehicle body. The downtube 103 is joined at the top end to the head pipe 102, and extends rearward and downward. The left and right side tubes 104 extend rearward from the bottom part of the downtube 103. The side tubes 104 are joined to the downtube 103 by a joining part 105 and are extended rearward and upward while extended outward in the transverse direction of the vehicle. A footboard (not shown) is provided over the left and right side tubes 104.

In this type of conventional vehicle frame 101, the downtube 103 is inclined forward at a large angle in a side view of the vehicle body. The length A of the downtube 103 in the longitudinal direction of the vehicle is equal to or greater than the length B of the head pipe 102 in the longitudinal direction of the vehicle.

Additionally, the joining part 105 between the downtube 103 and the side tubes 104 is located rearward of a rear end line C of the head pipe 102 in the longitudinal direction of the vehicle.

However, since the downtube 103 is inclined forward at a comparatively large angle as described above, the length of the footboard becomes short in the longitudinal direction. This makes it difficult for a rider to freely position his/her feet on the footboard. On the other hand, the wheelbase increases and the vehicle body becomes larger when the length of the footboard in the longitudinal direction is increased by increasing the distance between the front and rear wheels.

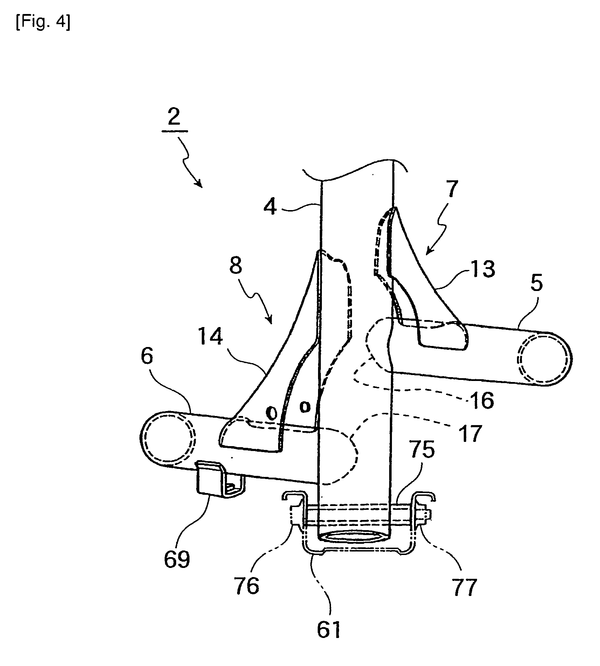

JP 03109130 A discloses a three-wheeled vehicle driven by an electric motor having a plurality of batteries arranged in a battery board having upper and lower lateral frame members surrounding the batteries. A first front frame member extends between a lower portion of a head pipe and the lower lateral frame members of the battery board. An upper front frame member having a curved shape extends between an upper portion of the head pipe and the front ends of the upper lateral frame members forming the battery board. As can be best seen in Fig. 4, two separate footrests are arranged on each lateral side of the battery board.
US 5,433,286 A discloses a motorcycle of the scooter-type having a frame body. The frame body comprises lower frame members and a sub-frame arranged above the lower frames. Both the lower.frames and the sub-frame are connected to a downtube extending downwardly from a head pipe. Two separate footrests are arranged laterally outside of and lower than the sub-frame. The downtube is connected to the lowermost end of the head pipe.
FR 2 855 462 A1 is concerned with an electric vehicle having a frame connected to a lower part of the head pipe. A battery box arranged at the lower part of the frame forms a footrest.
EP 1 914 158 A2 on which the preamble of claim 1 is based, discloses a straddle-type vehicle comprising a fuel cell unit arranged between two separate footrest sections arranged laterally outside of a part of a vehicle body surrounding the fuel cell unit. A frame includes a straight front frame section connected to a lower part of a head pipe of the straddle-type vehicle.
The present invention is devised in view of such circumstances, and an object thereof is to provide a scooter type vehicle wherein the footrest space can be kept large without increasing the wheelbase.
This object is achieved by a scooter type vehicle in accordance with claim 1.

### Advantageous Effects of Invention

According to the present invention, it is possible to keep the footrest space large without increasing the wheelbase.

### Brief Description of Drawings

[fig.1]FIG. 1 is a left side view of a scooter type vehicle according to Embodiment 1.
[fig.2]FIG. 2 is a left side view of a vehicle frame alone of the scooter type vehicle according to Embodiment 1.
[fig.3]FIG. 3 is a plan view of the vehicle frame alone of the scooter type vehicle according to Embodiment 1.
[fig.4]FIG. 4 is a front view of the vehicle frame of the scooter type vehicle according to Embodiment 1, seen along an arrow IV in FIG. 2.
[fig.5]FIG. 5 is a left side view of a vehicle frame alone of a scooter type vehicle according to Embodiment 2 which belongs to the present invention.
[fig.6]FIG. 6 is a front view of the vehicle frame of the scooter type vehicle according to Embodiment 2, seen along an arrow VIII in FIG. 5.
[fig.7]FIG. 7 is a perspective view of the vehicle frame of the scooter type vehicle according to another embodiment, seen from a rear left position.
[fig.8]FIG. 8 is a perspective view the vehicle frame of the scooter type vehicle according to another embodiment, seen from a front left position.
[fig.9]FIG. 9 is a perspective view of the vehicle frame of the scooter type vehicle according to another embodiment, seen from a front left position.
[fig.10]FIG. 10 is a perspective view of the vehicle frame of the scooter type vehicle according to another embodiment, seen from a rear right position.
[fig.11]FIG. 11 is a left side view of the vehicle frame of the scooter type vehicle according to another embodiment.
[fig.12]FIG. 12 is a side view of a vehicle frame illustrating a conventional art.

### Description of Embodiments

Embodiments of the present invention are described hereinbelow with reference to the drawings.

### Embodiment 1

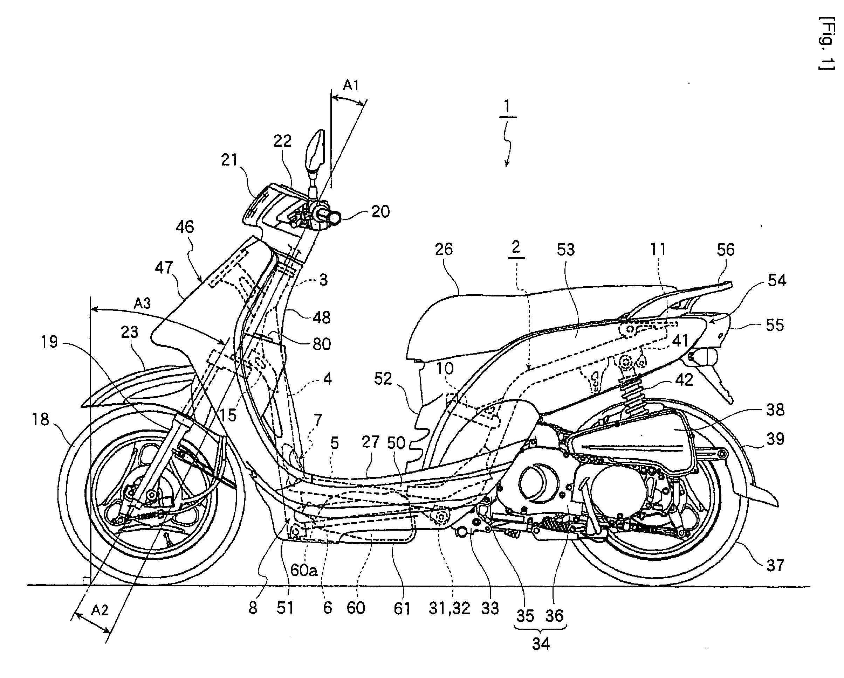

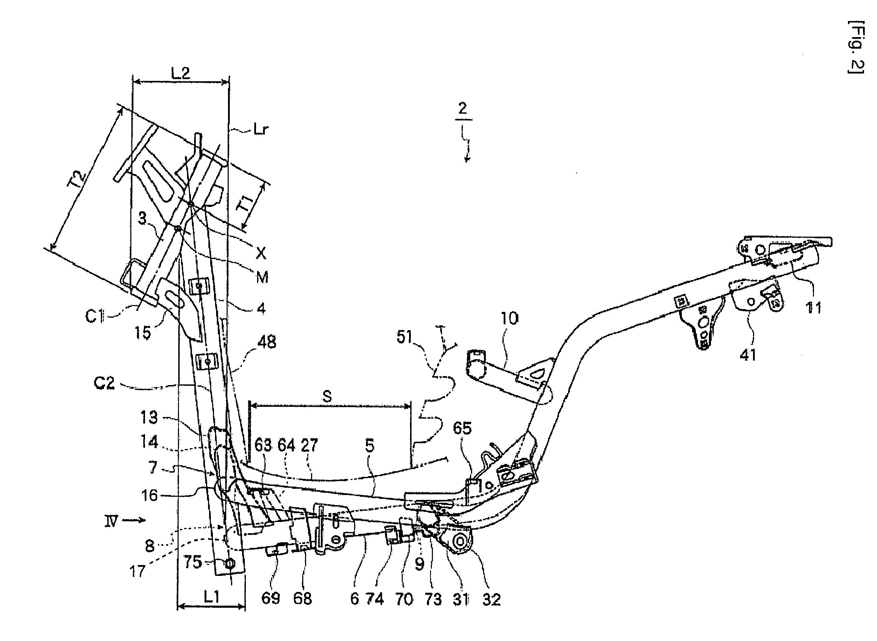

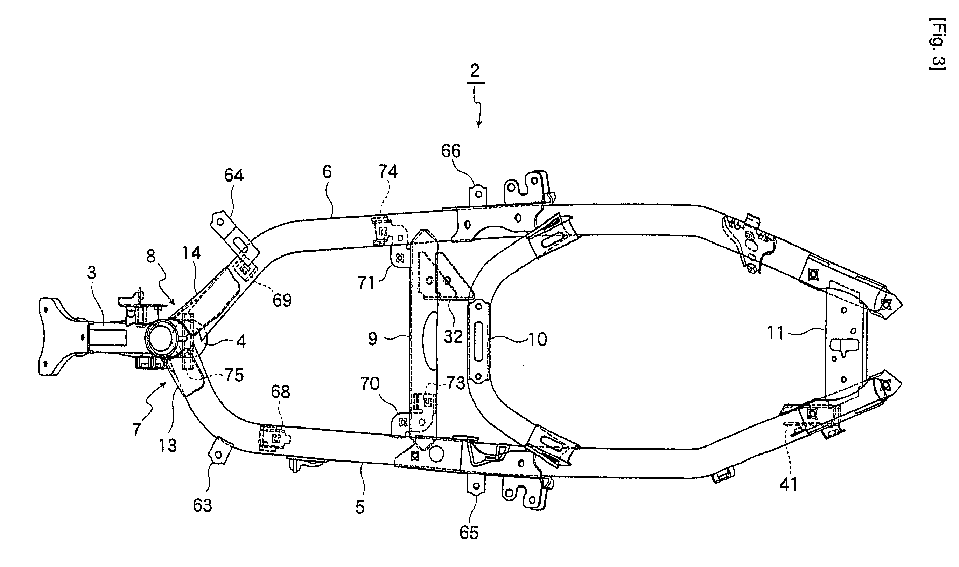

FIG. 1 is a left side view of a scooter type vehicle according to Embodiment 1. FIG. 2 is a left side view of a vehicle frame alone of the scooter type vehicle, FIG. 3 is a plan view of the vehicle frame, and FIG. 4 is a front view of the vehicle frame as indicated by the arrow IV in FIG. 2.

The vehicle frame 2 of the scooter type vehicle 1 is provided with a head pipe 3, a front frame 4, a left rear frame 5, a right rear frame 6, coupling frames 9, 10, 11, and other components. The head pipe 3 is a straight tubular member positioned at the top part on the front side of the vehicle frame 2. The front frame 4 is a straight tubular member extending downward, while the top end thereof is joined to the head pipe 3. The left rear frame 5 extends in a left-rearward direction of the vehicle body, while the front end thereof is joined to an approximately bottom end of the front frame 4. The right rear frame 6 extends in a right-rearward direction of the vehicle, while the front end thereof is joined to an approximately bottom end of the front frame 4 in the same manner as the left rear frame 5. The coupling frames 9, 10, 11 link the left and right rear frames 5, 6 together in the transverse direction of the vehicle.

In a left joining part 7, the distal end of the left rear frame 5 is joined to the front frame 4, as illustrated in FIG. 4. On the other hand, in a right joining part 8, the distal end of the right rear frame 6 is joined to the front frame 4. The distal ends of the left and right rear frames 5, 6 are joined at substantially right angles to the left and right side surfaces of the approximately bottom end of the front frame 4 by the left joining part 7 and the right joining part 8 in a front view of the vehicle body.

The left joining part 7 has a main joining part 16 and a reinforcing member 13. Also, the right joining part 8 has a main joining part 17 and a reinforcing member 14. The main joining parts 16, 17 are portions for joining the distal ends of the left and right rear frames 5, 6 to the front frame 4. The distal ends of the left and right rear frames 5, 6 may be joined to the front frame 4 by welding, for example. In the present embodiment, the left and right main joining parts 16, 17 are vertically positioned at completely separated heights, as illustrated in FIG. 4. However, the main joining parts 16, 17 may partially overlap in the transverse direction, i.e., may be somewhat misaligned.

The reinforcing members 13, 14 are joined to the front frame 4 and upper parts of the left and right rear frames 5, 6, as illustrated in FIGS. 2 through 4. As is obvious in FIG. 4, in a front view of the vehicle body, the left rear frame 5 is inclined downward as it extends away from the front frame 4, and the right rear frame 6 is inclined upward as it extends away from the front frame 4. The height difference is thereby reduced between the outmost parts of the left and right rear frames 5, 6 in the transverse direction of the vehicle. Moreover, with the low-height right rear frame 6, reduction in the bank angle to the right side of the vehicle body can be prevented.

The left joining part 7 and the right joining part 8 overlap with the front frame 4 in a side view of the vehicle body, respectively. The left joining part 7 and the right joining part 8 are joined to the front frame 4 so as to be misaligned in the height direction. In the present embodiment, for example, the left rear frame 5 and the left joining part 7 are positioned higher than the right rear frame 6 and the right joining part 8. Therefore, in a side view of the vehicle body (see FIG. 2), the front portion of the left rear frame 5 is angled in a downwardly rearward direction, while the front portion of the right rear frame 6 is angled in an upwardly rearward direction. Conversely, left joining part 7 may be positioned lower than the right joining part 8. In this case, in a side view of the vehicle body, the front portion of the right rear frame 6 is angled in a downwardly rearward direction, whereas the front portion of the left rear frame 5 is angled in an upwardly rearward direction.

A front fork 19 is supported on the head pipe 3, and is allowed to rotate about the head pipe 3. A front wheel 18 is rotatably supported on the bottom end of the front fork 19. A handle 20 for steering the front wheel 18 is provided at the top end of the front fork 19. A headlight 21, a meter panel 22, and other devices are provided in the vicinity of the top end of the front fork 19. A front fender 23 for covering the top of the front wheel 18 is fixed to the front fork 19. The reinforcing member 15 is provided to the joining part between the head pipe 3 and the front frame 4.

A seat 26 on which a rider straddles is disposed on the rear portions of the rear frames 5, 6 extending in an upwardly rearward direction of the vehicle body. The seat 26 is disposed rearward of the head pipe 3 and the front frame 4. A low-floor footboard 27 is disposed between the seat 26 and the handle 20 (head pipe 3). A rider puts his/her feet on the footboard 27 during driving of the vehicle.

The footboard 27 is disposed above the front portions of the left and right rear frames 5,6.

A pair of left and right engine brackets 31, 32 is fixed to the coupling frame 9 positioned in the center bottom of the vehicle frame 2. A power unit 34 is supported by the engine brackets 31, 32 via link member 33 in a vertically swingable manner. The power unit 34 has an engine 35 and a belt transmission device 36 integrally provided to the rear part of the engine 35. The power unit 34 is a common model for scooter type vehicles. A rear wheel 37 is rotatably supported at the rear part of the belt transmission device 36, and an air cleaner 38 is disposed at the top of the belt transmission device 36. Furthermore, a rear fender 39 is disposed over the rear wheel 37.

Furthermore, a rear suspension 42 is linked between the rear part of the belt transmission device 36 and a bracket 41. The bracket 41 is fixed to the rear part of the left rear frame 5.

The periphery of the vehicle frame 2 and the power unit 34 are covered with a vehicle body cover 46 made of synthetic resin. The outward appearance of the vehicle body is thereby improved and internal devices and the like are protected. The vehicle body cover 46 is composed of a plurality of cover members including, e.g., a front cover 47, a leg shield cover 48, a side cover 50, an under cover 51, a rear cover 52 and a rear side cover 53.

A rear cover part is formed by the rear cover 52 and the rear side cover 53. The rear cover part covers underneath the seat 26. The interior thereof has an article storage compartment (not shown). A taillight 55 and a grab bar 56 are disposed in the rear part of the vehicle.

A fuel tank 60 is disposed underneath the footboard 27 and between the left and right rear frames 5, 6 of the vehicle frame 2. The bottom surface of the fuel tank 60 is covered with a tank guard 61.

The left and right rear frames 5, 6 and the coupling frame 9 are provided with: footboard fastening brackets 63, 64, 65, 66 to which the footboard 27 is fastened from above with bolts; tank fastening brackets 68, 69, 70, 71 to which the fuel tank 60 is fastened; and guard fastening brackets 73, 74 to which the rear part of the tank guard 61 is fastened.

A cylindrical guard fastening boss 75 is fixed to the approximately bottom end of the front frame 4. The guard fastening boss 75 passes through the approximately bottom end of the front frame 4 in the transverse direction of the vehicle. The front part of the tank guard 61 is fastened by a through bolt 76 and a nut 77 to the guard fastening boss 75. Therefore, the bottom end of the front frame 4 and the fuel tank 60 are guarded by the tank guard 61. It is thereby possible to inhibit damage of the components, which is caused by collision with obstructions, ridges and the like on the road that the vehicle travels.

Fuel is supplied to the fuel tank 60 from a fuel filler tube opening 80 provided in the vicinity of a left center part of the leg shield cover 48. The fuel filler tube opening 80 and a fuel supply filler tube 60a provided to the front part of the fuel tank 60 are connected through a fuel pipe (not shown) disposed in the space between the front cover 47 and the leg shield cover 48.

As illustrated in FIG. 2, the front frame 4 of the vehicle frame 2 is angled slightly forward than the right angle in a side view. In an upright state, the front frame 4 is also angled for making a length L1 thereof in the longitudinal direction of the vehicle shorter than a length L2 of the head pipe 3 in the longitudinal direction of the vehicle. The term "upright state" herein refers to a state that the front wheel 18 and the rear wheel 37 are in contact with the ground and stand perpendicularly to a horizontal plane in a front view of the vehicle body as illustrated in FIG. 1. Additionally, the term "length in the longitudinal direction of the vehicle" refers to the horizontal length to the ground in a side view of the vehicle body. In the present embodiment, the positional relationship of the members of the scooter type vehicle 1 is described based on the vehicle body being in the upright state. The front frame 4 is inclined in a downwardly and rearwardly extending direction in a side view. The head pipe 3 is inclined in a downwardly and forwardly extending direction in a side view. In the present embodiment, the inclination angle of the front frame 4 with respect to a vertical line is set to be less than the inclination angle of the head pipe 3 similarly with respect to a vertical line. Additionally, the inclination angle of the front frame 4 is closer to the right angle than that of the head pipe 3.

In a side view of the vehicle body, an intersection X between an axis C1 of the head pipe 3 and an axis C2 of the front frame 4 is positioned higher than a vertical center M of the head pipe 3. For example, in the present embodiment, a distance T1 from the top end of the head pipe 3 to the intersection X is approximately one third of an entire length T2 of the head pipe 3. However, the distance T 1 is not limited to one third of the entire length T2, and may be arbitrarily set as long as the intersection X is positioned higher than the vertical center M.

Furthermore, the left joining part 7 and the right joining part 8 are positioned at least partially forward of the rear end of the head pipe 3. In other words, the reinforcing member 13 of the left joining part 7 and the reinforcing member 14 of the right joining part 8 are positioned forward of a rear end line Lr of the head pipe 3 in the longitudinal direction of the vehicle, as illustrated in FIG. 2.

The front fork 19 is provided at a yoke angle A2 of several degrees with respect to the rearward inclination angle A 1 of the head pipe 3, as illustrated in FIG. 1. The yoke angle A2 allows the rearward inclination angle (caster angle) A3 of the front fork 19 to be greater than the rearward inclination angle A1 of the head pipe 3.

In this scooter type vehicle 1, the length L1 of the front frame 4 in the longitudinal direction of the vehicle is less than the length L2 of the head pipe 3 in the longitudinal direction of the vehicle. The forward inclination angle of the front frame 4 in a side view of the vehicle body is therefore a steep angle substantially the same as the right angle. In the present embodiment, the forward inclination angle is set to be within 10 degrees of the right angle.

Therefore, in a plan view of the vehicle body, the joining portion between the front frame 4 and the rear fame 5 is positioned as forward as possible. Accordingly, the footboard 27 is allowed to be enlarged. On the other hand, when the inclination angle of the front frame 4 is set to be small with respect to the perpendicular line in a side view of the vehicle body, distance between the front frame 4 and the front wheel 18 will be accordingly reduced. According to the scooter type vehicle of the present embodiment, the intersection X between the axis C1 of the head pipe 3 and the axis C2 of the front frame 4 is positioned higher than the vertical center M of the head pipe 3. With the structure, it is possible to ensure sufficient distance from the front end of the headpipe 3 to the front end of the front frame 4 in the longitudinal direction of the vehicle. As a result, even when the inclination angle of the front frame 4 with respect to the perpendicular line is set to be small in a side view of the vehicle, it is possible to ensure sufficient distance between the front wheel 18 and the front frame 4.

Moreover, the left joining part 7 or the right joining part 8 is at least partially disposed forward of the rear end line Lr of the head pipe 3 in the longitudinal direction of the vehicle. Accordingly, the footboard 27 can be extended to the forward. The footboard 27 can thereby be enlarged. Based on the above, the longitudinal dimension S (see FIG. 2) of the footboard 27 can be elongated. Accordingly, a large footrest space can be ensured without increasing the wheel base. As a result, a rider is allowed to more freely position his/her feet on the footboard 27.

Furthermore, in a side view of the vehicle body, the intersection X between the axis C1 of the head pipe 3 and the axis C2 of the front frame 4 is disposed higher than the vertical center M of the head pipe 3. Accordingly, the distance between the front wheel 18 and the footboard 27 can be sufficiently ensured, even when the forward inclination angle of the front frame 4 is set to be a steep angle substantially the same as the right angle. Therefore, enlargement of the wheel base of the scooter type vehicle 1 can be suppressed, and a large longitudinal dimension can be ensured in the footboard 27. As a result, a rider is allowed to more freely position his/her feet on the footboard 27.

The left and right rear frames 5, 6 are joined to the front frame 4 at substantially right angles. Accordingly, the footboard 27 can be enlarged to a position close to the front frame 4, and the footboard 27 can be enlarged.

In addition, the scooter type vehicle 1 is provided with the left rear frame 5 and the right rear frame 6 as a left and right pair, as described above. Therefore, the height of the footboard 27 is less likely to be increased and the footboard 27 can be formed larger than, e.g., an underbone vehicle frame in which only one rear frame extends rearward from the front frame 4, even if a component, requiring a large space (e.g., a large-capacity fuel tank 60), is disposed underneath the footboard 27.

Moreover, the left joining part 7 for joining the left rear frame 5 and front frame 4, and the right joining part 8 for joining the right rear frame 6 and front frame 4, overlap with the front frame 4 in a side view of the vehicle body. The left and right rear frames 5, 6 and the footboard 27 are allowed to be further enlarged.

Furthermore, the left joining part 7 and the right joining part 8 are joined to the front frame 4, while their joining positions are misaligned in terms of height. Therefore, the forward-rearward and left-to-right bending rigidity of the front frame 4 can be markedly improved in comparison with a case that the left and right joining parts 7, 8 are joined to the front frame 4 in the same height positions. The reinforcing members 13, 14, provided to the left and right joining parts 7, 8, are thereby allowed to be reduced in size and number. As a result, it is possible to prevent the reinforcing members 13, 14 and other components from interfering with the footboard 27, and the footboard 27 is allowed to be enlarged. Simultaneously, the structure contributes significantly to reduction in the weight and cost of the vehicle frame 2.

In addition, according to the present embodiment, the left joining part 7 and the right joining part 8 are misaligned in the height direction. Accordingly, the aforementioned forward-rearward and left-to-right bending rigidity of the front frame 4 can be enhanced. In particular, the forward-rearward and left-to-right bending rigidity of the front frame 4 can be further increased by disposing the main joining parts 16, 17 at a distance from each other in the height direction.

In a side view of the vehicle body, a yoke angle A2 is provided to the front fork 19 for increasing the rearward inclination angle A3 of the front fork 19 with respect to the rearward inclination angle A 1 of the head pipe 3. The front wheel 18 is thereby prevented from being positioned close to the footboard 27. Moreover, the longitudinal dimension of the footboard 27 can be increased while enlargement of the wheel base of the scooter type vehicle 1 is suppressed.

Moreover, since the front frame 4 has a straight tubular shape, the footboard 27 can be ensured to be larger in comparison with cases in which the front frame curves rearward.

### Embodiment 2 which belongs to the Invention

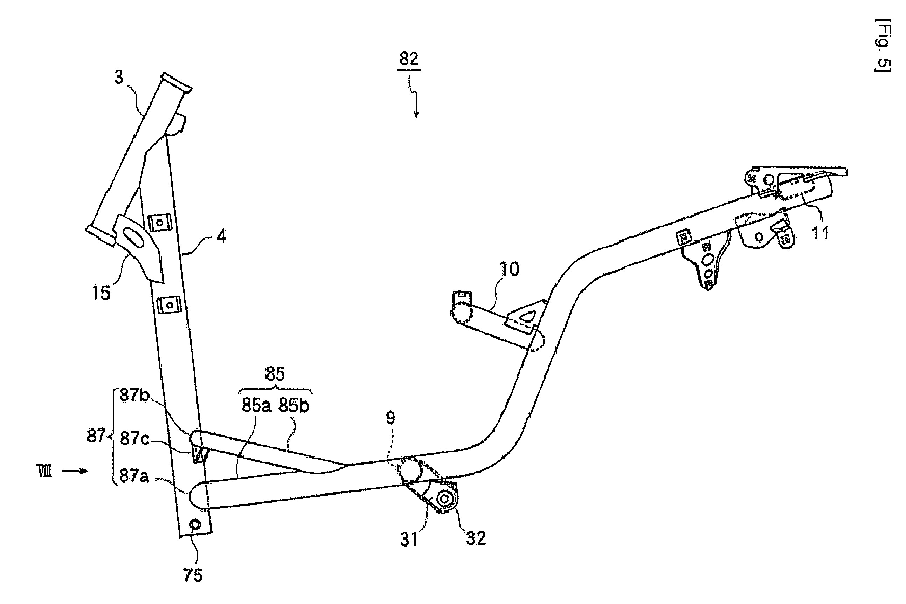

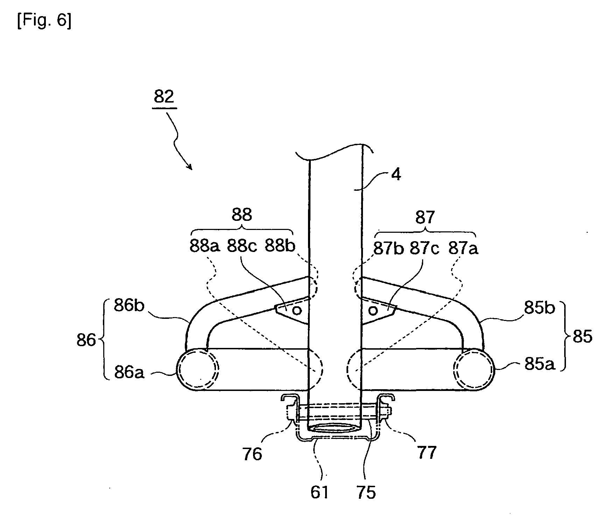

FIG. 5 is a left side view of a vehicle frame alone of a scooter type vehicle according to Embodiment 2 which belongs to the present invention, and FIG. 6 is a front view of the vehicle frame, seen from an arrow VIII in FIG. 5.

Excluding a left rear frame 85, a right rear frame 86, a left joining part 87 and a right joining part 88, the configuration of s vehicle frame 82 is substantially the same as that of the vehicle frame 2 of Embodiment 1 illustrated in FIGS. 2 and 3. The components of Embodiment 2 are therefore denoted by the same reference numerals as those of Embodiment 1, and are not hereinafter described. The relative positional relationship between the head pipe 3 and the front frame 4 is the same as that of the vehicle frame 2 in Embodiment 1.

The left rear frame 85 and the right rear frame 86 have a bilaterally asymmetrical shape. The left rear frame 85 includes a left lower frame 85a and a left upper frame 85b. The right rear frame 86 includes a right lower frame 86a and a right upper frame 86b.

The distal ends of the left lower frame 85a and the right lower frame 86a are joined at substantially right angles to the left and right side surfaces of an approximately bottom end of the front frame 4 in a front view of the vehicle body. The front portions of the left lower frame 85a and the right lower frame 86a are extended rearward, while the rear portions thereof are extend in an upwardly rearward direction. On the other hand, the front ends of the left upper frame 85b and the right upper frame 86b are joined at substantially right angles to the left and right side surfaces of the front frame 4 in a front view of the vehicle body. The rear ends of the left upper frame 85b and the right upper frame 86b are joined to the top edges of the front portions of the left and right lower frames 85a, 86a.

As illustrated in FIG. 6, the left joining part 87 includes a left lower joining part 87a, a left upper joining part 87b and a reinforcing member 87c. In the left lower joining part 87a, the left lower frame 85a is joined to the front frame 4. In the left upper joining part 87b, the left upper frame 85b is joined to the front frame 4. The reinforcing member 87c is disposed between the left upper joining part 87b and the front frame 4. On the other hand, the right joining part 88 includes a right lower joining part 88a, a right upper joining part 88b and a reinforcing member 88c. In the right lower joining part 88a, the right lower frame 86a is joined to the front frame 4. In the right upper joining part 88b, the right upper frame 86b is joined to the front frame 4. The reinforcing member 88c is disposed between the right upper joining part 88b and the front frame 4. The left and right joining parts 87, 88 at least partially overlap with the front frame 4 in a side view of the vehicle body (see FIG. 5).

The left upper joining part 87b and the right lower joining part 88a are joined to the front frame 4 in different height positions. The left lower joining part 87a and the right upper joining part 88b are joined to the front frame 4 in different height positions. Therefore, the forward-rearward and left-to-right bending rigidity of the front frame 4 can be significantly improved in the same manner as the vehicle frame 2 of Embodiment 1.

### Other Embodiments of the Invention

The present invention is not limited to the mode of the aforementioned Embodiment 2. For example, various other modes are possible for the shapes, positions, and other characteristics of the joining structure of the front frame 4 and the left and right rear frames 5, 6, as well as the reinforcing members 13, 14, 15. Their modes also have same advantageous effects as the aforementioned Embodiments.

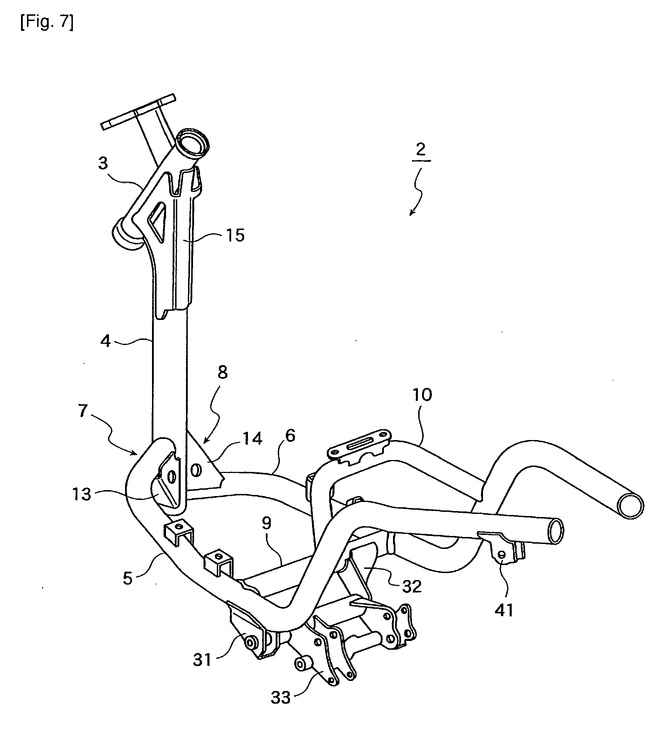

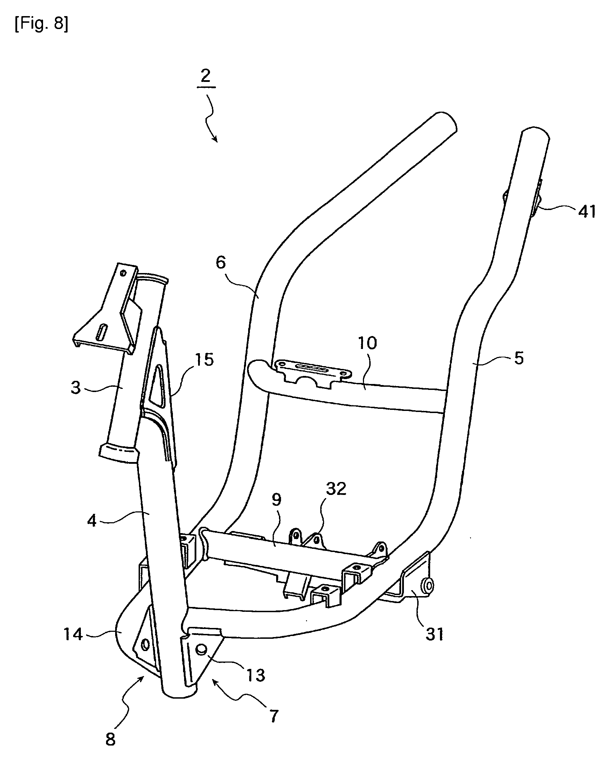

FIGS. 7 and 8 illustrate another case of the first embodiment in which a position of the reinforcing member is changed. As illustrated in FIGS. 7 and 8, the reinforcing member 13 of the left rear frame 5 joined to the front frame 4 at a higher position than the right rear frame 6 may be joined to the bottom edge of the left rear frame 5. Moreover, the reinforcing member 14 of the right rear frame 6 joined to the front frame 4 at a lower position than the left rear frame 5 may be joined to the top edge of the right rear frame 6. The structure makes it possible to prevent the reinforcing member 13 from easily interfering with the front part of the footboard 27 to be described and to enlarge the footboard 27.

Furthermore, in Embodiment 1, the reinforcing members 13, 14 are not necessarily essential elements for forming the left joining part 7 and the right joining part 8. Therefore, the reinforcing members 13, 14 may be omitted. In Embodiment 2, the reinforcing members 87c, 88c may be similarly omitted by increasing the joining strength of the left lower joining part 87a, the left upper joining part 87b, the right lower joining part 88a and the right upper joining part 88b.

In addition, the position of the fuel tank 60 is not limited to underneath the footboard 27. The fuel tank 60 may be disposed underneath the seat 26 or in another position, for example.

Furthermore, in the aforementioned Embodiments 1 and 2, the bottom end of the front frame 4 is extended to a position lower than the lower rear frame joining parts 8, 87a, 88a. However, the bottom end of the front frame 4 may be extended up to the lower rear frame joining parts 8, 87a, 88a.

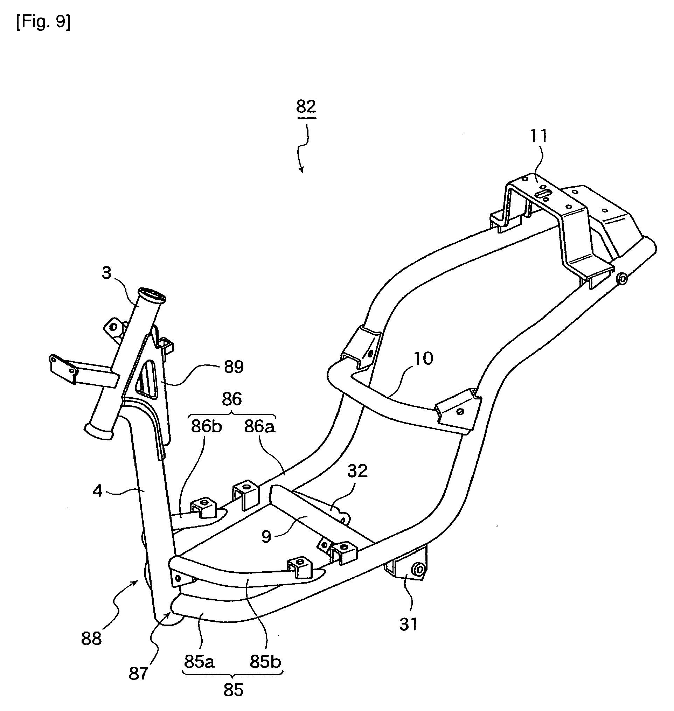

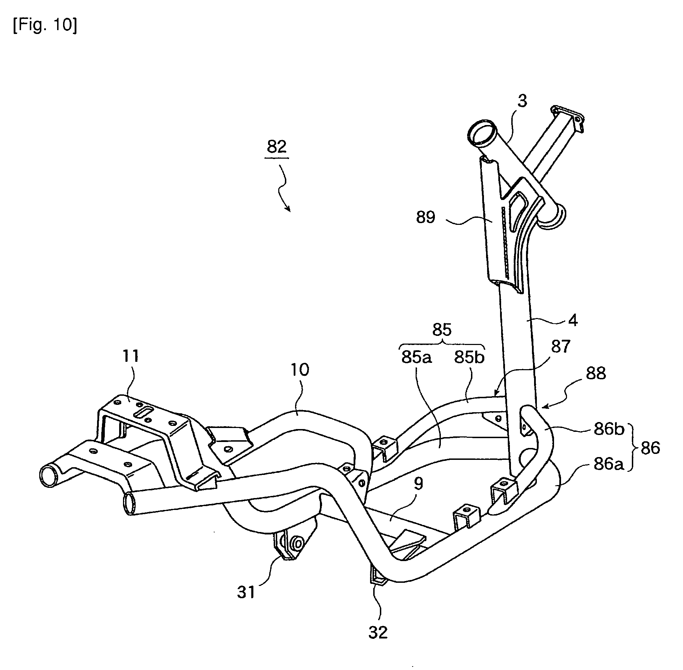

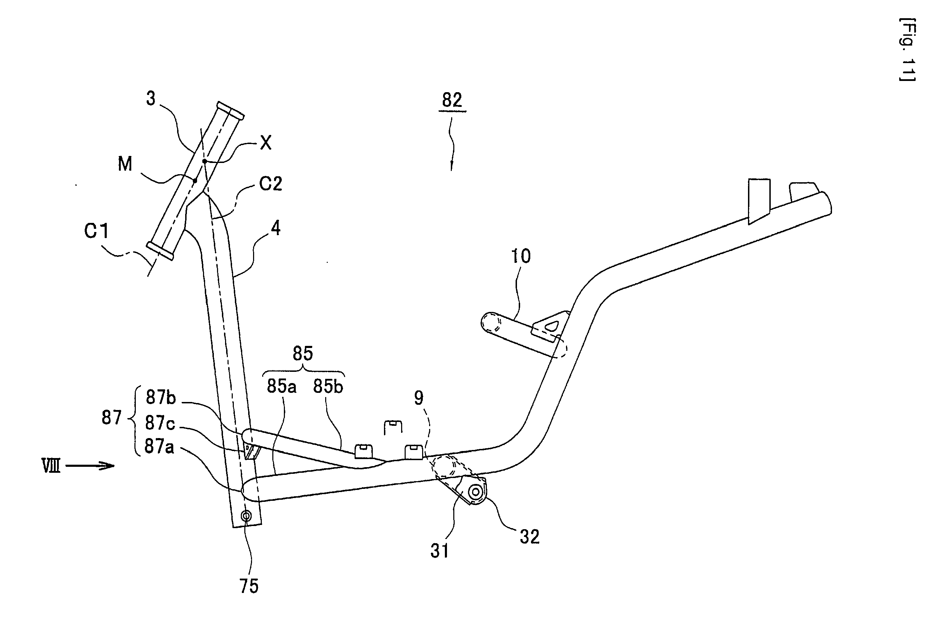

In addition, the front frame 4 may at least partially include a linear portion. When the front frame 4 partially includes a curved portion, the aforementioned intersection X is determined by the intersection between the axis of the head pipe 3 and the extension of the axis of the linear portion of the front frame 4. For example, the upper end of the front frame 4 may have a curved shape, as illustrated in FIGS. 9 through 11. In this case, the intersection X is determined by the intersection between the axis C1 of the head pipe 3 and the extension C2 of the axis of the linear portion of the front frame 4, as illustrated in FIG. 11. FIG. 9 is a perspective view of the vehicle frame, seen from a front left position. FIG. 10 is a perspective view of the vehicle frame, seen from a rear right position. FIG. 11 is a left side view of the vehicle frame, and the reinforcing member 89, illustrated in FIGS. 9 and 10, is omitted in FIG. 11 for ease understanding.

The shape of the top surface of the footboard 27 may not be necessarily formed in a flat shape. For example, the top surface of the footboard 27 may be partially protruded upward for avoiding interference with the vehicle frame, the fuel tank, and other structures. Moreover, the footboard 27 may be composed of a pair of right and left footrests and an upwardly-protruding portion interposed between the pair of right and left footrests. Furthermore, according to the aforementioned Embodiments 1 and 2, the head pipe 3 and the front frame 4 are connected by welding. However, the present invention is not limited to this. For example, the head pipe 3 and the front frame 4 may be integrally formed. Moreover, components of the vehicle frame 2 are not limited to the aforementioned embodiments. For example, the vehicle frame 2 may be composed of a single member formed by integration of a plurality of members. Alternatively, the vehicle frame 2 may be composed of a plurality of members separately formed.

### Industrial Applicability

The present invention has an advantageous effect that a large footrest space can be ensured without increasing the wheelbase, and can be used in a scooter type vehicle.

### Reference Signs List

- 1: Scooter type vehicle
- 2: Vehicle frame
- 3: Head pipe
- 4: Front frame
- 5: Left rear frame
- 6: Right rear frame
- 7: Left joining part
- 8: Right joining part
- 13, 14: Reinforcing members
- 19: Front fork
- 20: Handle
- 26: Seat
- 27: Footboard
- 34: Power unit
- 87b: Left upper joining part
- 87a: Left lower joining part
- 88b: Right upper joining part
- 88a: Right lower joining part
- C1: Axis of head pipe
- C2: Axis of front frame
- L1: Length of front frame in longitudinal direction of vehicle
- L2: Length of head pipe in longitudinal direction of vehicle
- M: Vertical center of head pipe
- X: Intersection between head pipe axis and front frame axis
- A1: Rearward inclination angle of head pipe
- A3: Caster angle of front fork
- A2: Yoke angle

## Claims

1. A scooter type vehicle (1), comprising:
a front wheel (18) and a rear wheel (37);
a front fork (19) supporting the front wheel for allowing the front wheel to rotate;
a head pipe (3) supporting the front fork for allowing the front fork to rotate;
a seat (26) disposed rearward of the head pipe;
a footboard (27) disposed below the head pipe and the seat, the footboard disposed between the head pipe and the seat;
a front frame (4) being a single tubular member extending downward, the front frame partially including a linear portion, a top end of the front frame joined to the head pipe (3), the front frame having a shorter length than the head pipe in the longitudinal direction of the vehicle (1) in an upright state that the front and rear wheels are in contact with the ground and are perpendicular to a horizontal plane in a front view of the vehicle;
a left rear frame (5) and a right rear frame (6), a front end of the rear frames (5, 6) joined to a bottom part of the front frame (4), the left rear frame (5) extending in a left-rearward direction of the vehicle, the right rear frame (6) extending in a right-rearward direction of the vehicle (1); and
a joining part (7, 8) for joining the rear frame to the front frame, the joining part at least partially positioned forward of a rear end of the head pipe in the upright state,
wherein the joining part has a left joining part (7) for joining the left rear frame (5) and the front frame (4), and a right joining part (8) for joining the right rear frame (6) and the front frame (4),
wherein the left joining part (7) has a left upper joining part (87b) and a left lower joining part (87a),
the right joining part (8) has a right upper joining part (88b) and a right lower joining part (88a),
the footboard (27) is arranged above the front portions of the left and right rear frames (5, 6),
the left upper joining part (87b) and the right lower joining part (88a) are misaligned in the height direction, and
the left lower joining part (87a) and the right upper joining part (88a) are misaligned in the height direction,
**characterized in that**
the left upper and lower joining parts are aligned in the height direction,
the right upper and lower joining parts are aligned in the height direction, and
an intersection (x) between an extension of an axis (C2) of the linear portion of the front frame and an axis (C1) of the head pipe (3) is positioned higher than a vertical center (M) of the head pipe in a side view of the vehicle (1).

2. The scooter type vehicle according to claim 1, wherein the rear frame is joined to the front frame at substantially right angle in the front view of the vehicle.

3. The scooter type vehicle according to claim 1, wherein the left joining part (7) and the right joining part (8) overlap with the front frame in the side view of the vehicle.

4. The scooter type vehicle according to any one of Claims 1 to 3, wherein the front fork (19) is provided with a yoke angle (A2) to increase the rearward inclination angle (A3) of the front fork to be greater than the rearward inclination angle (A1) of the head pipe.

5. The scooter type vehicle according to any one of claim 1 to 4, wherein the front frame is formed in a straight pipe shape.

## Patentansprüche

1. Ein motorrollerartiges Fahrzeug (1), das folgende Merkmale umfasst:
ein Vorderrad (18) und ein Hinterrad (37);
eine Vordergabel (19), die das Vorderrad trägt, zum Ermöglichen einer Drehung des Vorderrads;
ein Kopfrohr (3), das die Vordergabel trägt, zum Ermöglichen einer Drehung der Vordergabel;
einen Sitz (26), der hinter dem Kopfrohr angeordnet ist;
ein Trittbrett (27), das unter dem Kopfrohr und dem Sitz angeordnet ist, wobei das Trittbrett zwischen dem Kopfrohr und dem Sitz angeordnet ist;
einen vorderen Rahmen (4), der ein einzelnes röhrenförmiges Bauteil ist, das sich nach unten erstreckt, wobei der vordere Rahmen teilweise einen linearen Abschnitt umfasst, wobei ein oberes Ende des vorderen Rahmens mit dem Kopfrohr (3) verbunden ist, wobei der vordere Rahmen in der Längsrichtung des Fahrzeugs (1) in einem aufrechten Zustand, bei dem das Vorder- und das Hinterrad in Kontakt mit dem Boden sind und in einer Frontansicht des Fahrzeugs senkrecht zu einer horizontalen Ebene sind, eine kürzere Länge aufweist als das Kopfrohr;
einen linken hinteren Rahmen (5) und einen rechten hinteren Rahmen (6), wobei ein vorderes Ende der hinteren Rahmen (5, 6) mit einem unteren Teil des vorderen Rahmens (4) verbunden ist, wobei sich der linke hintere Rahmen (5) in einer Richtung nach links hinten des Fahrzeugs erstreckt, wobei sich der rechte hintere Rahmen (6) in einer Richtung nach rechts hinten des Fahrzeugs (1) erstreckt; und
einen Verbindungsteil (7, 8) zum Verbinden des hinteren Rahmens mit dem vorderen Rahmen, wobei der Verbindungsteil in dem aufrechten Zustand zumindest teilweise vor einem hinteren Ende des Kopfrohrs positioniert ist,
wobei der Verbindungsteil einen linken Verbindungsteil (7) zum Verbinden des linken hinteren Rahmens (5) und des vorderen Rahmens (4) und einen rechten Verbindungsteil (8) zum Verbinden des rechten hinteren Rahmens (6) und des vorderen Rahmens (4) aufweist,
wobei der linke Verbindungsteil (7) einen linken oberen Verbindungsteil (87b) und einen linken unteren Verbindungsteil (87a) aufweist,
der rechte Verbindungsteil (8) einen rechten oberen Verbindungsteil (88b) und einen rechten unteren Verbindungsteil (88a) aufweist,
das Trittbrett (27) oberhalb der vorderen Abschnitte des linken und des rechten hinteren Rahmens (5, 6) angeordnet ist,
der linke obere Verbindungsteil (87b) und der rechte untere Verbindungsteil (88a) in der Höhenrichtung fehlausgerichtet sind, und
der linke untere Verbindungsteil (87a) und der rechte obere Verbindungsteil (88a) in der Höhenrichtung fehlausgerichtet sind,
**dadurch gekennzeichnet, dass**
der linke obere und untere Verbindungsteil in der Höhenrichtung ausgerichtet sind,
der rechte obere und untere Verbindungsteil in der Höhenrichtung ausgerichtet sind, und
eine Schnittstelle (x) zwischen einer Verlängerung einer Achse (C2) des linearen Abschnitts des vorderen Rahmens und einer Achse (C1) des Kopfrohrs (3) in einer Seitenansicht des Fahrzeugs (1) höher positioniert ist als eine vertikale Mitte (M) des Kopfrohrs.

2. Das motorrollerartige Fahrzeug gemäß Anspruch 1, bei dem der hintere Rahmen mit dem vorderen Rahmen in der Vorderansicht des Fahrzeugs in einem im Wesentlichen rechten Winkel verbunden ist.

3. Das motorrollerartige Fahrzeug gemäß Anspruch 1, bei dem der linke Verbindungsteil (7) und der rechte Verbindungsteil (8) sich in der Seitenansicht des Fahrzeugs mit dem vorderen Rahmen überlappen.

4. Das motorrollerartige Fahrzeug gemäß einem der Ansprüche 1 bis 3, bei dem die Vordergabel (19) unter einem Jochwinkel (A2) vorgesehen ist, um den rückwärtigen Neigungswinkel (A3) der Vordergabel zu erhöhen, so dass dieser größer ist als der rückwärtige Neigungswinkel (A1) des Kopfrohrs.

5. Das motorrollerartige Fahrzeug gemäß einem der Ansprüche 1 bis 4, bei dem der vordere Rahmen in einer geraden Rohrform gebildet ist.

## Revendications

1. Véhicule de type scooter (1), comprenant:
une roue avant (18) et une roue arrière (37);
une fourche avant (19) supportant la roue avant, pour permettre à la roue avant de tourner;
un tube principal (3) supportant la fourche avant, pour permettre à la fourche avant de tourner;
un siège (26) disposé à l'arrière du tube principal;
un marchepied (27) disposé au-dessous du tube principal et du siège, le marchepied étant disposé entre le tube principal et le siège;
un châssis avant (4) qui est un seul élément tubulaire s'étendant vers le bas, le châssis avant comportant partiellement une partie linéaire, une extrémité supérieure du châssis avant étant unie au tube principal (3), le châssis avant présentant une longueur plus courte que le tube principal dans la direction longitudinale du véhicule (1) à l'état vertical où les roues avant et arrière sont en contact avec le sol et sont perpendiculaires à un plan horizontal en vue frontale du véhicule;
un châssis arrière gauche (5) et un châssis arrière droit (6), une extrémité avant des châssis arrière (5, 6) étant unie à la partie inférieure du châssis avant (4), le châssis arrière gauche (5) s'étendant dans une direction vers l'arrière et la gauche du véhicule, le châssis arrière droit (6) s'étendant dans une direction vers l'arrière et la droite du véhicule (1); et
une partie d'union (7, 8) destinée à unir le châssis arrière au châssis avant, la partie d'union étant positionnée au moins partiellement à l'avant d'une extrémité arrière du tube principal à l'état vertical,
dans lequel la partie d'union présente une partie d'union gauche (7) destinée à unir le châssis arrière gauche (5) et le châssis avant (4), et une partie d'union droite (8) destinée à unir le châssis arrière droit (6) et le châssis avant (4),
dans lequel la partie d'union gauche (7) présente une partie d'union supérieure gauche (87b) et une partie d'union inférieure gauche (87a),
la partie d'union droite (8) présente une partie d'union supérieure droite (88b) et une partie d'union inférieure droite (88a),
le marchepied (27) est disposé au-dessus des parties avant des châssis arrière gauche et droit (5, 6),
la partie d'union supérieure gauche (87b) et la partie d'union inférieure droite (88a) sont désalignées dans le sens de la hauteur, et
la partie d'union inférieure gauche (87a) et la partie d'union supérieure droite (88a) sont désalignées dans le sens de la hauteur,
**caractérisé par le fait que**
les parties d'union supérieure et inférieure gauches sont alignées dans le sens de la hauteur,
les parties d'union supérieure et inférieure droites sont alignées dans le sens de la hauteur, et
une intersection (X) entre l'extension d'un axe (C2) de la partie linéaire du châssis avant et l'axe (C1) du tube principal (3) est positionnée plus haut qu'un centre vertical (M) du tube principal en vue latérale du véhicule (1).

2. Véhicule de type scooter selon la revendication 1, dans lequel le châssis arrière est uni au châssis avant selon un angle sensiblement droit en vue frontale du véhicule.

3. Véhicule de type scooter selon la revendication 1, dans lequel la partie d'union gauche (7) et la partie d'union droite (8) viennent en recouvrement avec le châssis avant en vue latérale du véhicule.

4. Véhicule de type scooter selon l'une quelconque des revendications 1 à 3, dans lequel la fourche avant (19) est pourvue d'un angle de déviation (A2) pour augmenter l'angle d'inclinaison vers l'arrière (A3) de la fourche avant de manière qu'il soit supérieur à l'angle d'inclinaison vers l'arrière (A1) du tube principal.

5. Véhicule de type scooter selon l'une quelconque des revendications 1 à 4, dans lequel le châssis avant est formé en forme de tube droit.
